# EUROPEAN PATENT APPLICATION

(11) **EP 4 647 381 A1**
(43) Date of publication of application: **12.11.2025**
(21) Application number: 25173923.1
(22) Date of filing: 02.05.2025
(51) Int. Cl.: B65H 19/18, B29C 65/18, B65B 41/12

(54) **SHRINK-WRAPPING MACHINE**

(30) Priority: 09.05.2024 IT 202400010495
(71) Applicant: A.C.M.I. - Societa' Per Azioni, 43045 Fornovo Di Taro (Parma) (IT)
(72) Inventor: MAGRI, Giacomo, 43021 CORNIGLIO (PR) (IT); BUEMI, Domenico, 26041 CASALMAGGIORE (CR) (IT)
(74) Representative: Corradini, Cesare

(57) **Abstract**

A feeding unit (G) of a wrapping tape (15) for a wrapping machine (10) is described, said feeding unit (G) comprising:
a support frame (T), a pair of support pins each of which can rotate relative to the support frame (T), preferably independently from the other support pin, of which a first support pin (45A), adapted to receive a first reel (B1) of wrapping tape (15), and a second support pin (45B), adapted to receive a second reel (B2) of wrapping tape, the first support pin (45A) and the second support pin (45B) being mutually parallel and placed side by side at a distance from each other along a flanking direction (B), a first welding device (50A) adapted to weld an end section of the wrapping tape (15) of the first reel (B1) with a section of the wrapping tape (15) of the second reel (B2),
- a carriage (85) adapted to receive and hold said end section of the wrapping tape (15) of the first reel (B1) and movable along the flanking direction (B) from a first receiving position wherein it is adapted to receive said end section of the first reel (B1) to a first welding position wherein it makes said end section available to the first welding device (50A) for welding it to the section of the wrapping tape (15) of the second reel (B2), a drive unit (90) connected to the carriage (85) and configured to move said carriage along the flanking direction (B).

## Description

### TECHNICAL FIELD

The present invention relates to the field of the packaging or wrapping of objects, either loose or in groups.

In particular, the invention relates to a feeding unit of a wrapping tape to a wrapping machine and a wrapping machine provided with the same.

### PRIOR ART

In the field of the wrapping or packaging of objects, either individually or in batches, wrapping machines are known, for example of the so-called shrink-wrapping type, which are configured to wrap said objects with a tape of a plastic i.e. polymeric material.

These wrapping machines, generally, comprise a frame supporting a handling plane where the objects to be wrapped are moved, a feeding unit that makes the wrapping tape available, and a wrapping unit that receives the wrapping tape from the feeding unit and wraps it around the object or batch of objects to be wrapped.

This feeding unit generally comprises a pair of pins each of which is adapted to receive and support in rotation a respective reel from which the wrapping tape can be unwound, of which one reel is being used and one is the reserve reel.

The feeding unit then comprises a feed track substantially defined by pairs of opposite rollers that properly stretch and guide the tape to the wrapping unit.

When the reel being used runs out, the reserve reel can be put into operation.

For this purpose, the feeding unit comprises a welding device that allows an initial section of the reserve reel to be welded with a section of the wrapping tape of the previously used reel in order to achieve a continuity in feeding the tape to the wrapping unit.

In order to put the reserve reel into operation, and to possibly replace the depleted reel, an operator must reach into a housing compartment, where such pins are arranged, grasp said initial section of the wrapping tape of the reserve reel, bring it to the welding device, and actuate the welding device to carry out said welding.

A need felt in the industry is to make this procedure of operating the reserve reel safer. An object of the present invention is to meet the need of the prior art.

A further object of the present invention is to achieve such an objective within the scope of a simple, rational and cost-effective solution.

Such an object is achieved by the features of the invention reported in the independent claim. The dependent claims outline preferred and/or particularly advantageous aspects of the invention.

### DISCLOSURE OF THE INVENTION

The invention in particular makes available a feeding unit of a wrapping tape for a wrapping machine, said feeding unit comprising:
- a support frame,
- a pair of support pins, each of which is rotatably associated with the support frame, i.e. can rotate (e.g., independently from the other support pin) relative to the support frame, a first support pin being adapted to receive a first reel of wrapping tape and a second support pin, adapted to receive a second reel of wrapping tape, the first support pin and the second support pin being mutually parallel and placed side by side at a distance from each other along a flanking direction,
- a first welding device to weld an end section of the wrapping tape of the first reel with a section of the wrapping tape of the second reel,
- a carriage adapted to receive and hold said end section of the first reel and movable along the flanking direction from a first receiving position wherein it is adapted to receive said first reel end section to a first welding position where it makes said end section available to the first welding device for welding it to the wrapping tape section of the second reel,
- a drive unit connected to the carriage and configured to move it along the flanking direction.

Thanks to this solution, the operation of the first reel is particularly safe, with the operator being able to easily handle the wrapping tape in a position distant from the first welding device.

In particular, whenever it is necessary to insert a new first reel, which in the first instance acts as a reserve reel while the second reel is in operation to feed the wrapping machine with the wrapping tape, the operator in charge of changing the reel will be able to comfortably handle the reel wrapping tape, so that the end section of the reel can be inserted into the carriage, in an area at a distance from the welding device, making the first reel change and its preparation for use particularly safe.

Another aspect of the invention provides that said drive unit may comprise:
- a pair of flexible members, each of which is wound in a loop around a respective drive pulley and a respective driven pulley, the drive pulley and driven pulley being rotatable around rotation axes parallel to the rotation axes of the first support pin and the second support pin, said flexible members having mutually parallel upper branches and extending along the flanking direction,
- a drive motor connected to the drive pulleys to drive them in rotation.

Thanks to this solution, the drive unit architecture is particularly effective.

Still another aspect of the invention provides that in the first receiving position, the carriage may be arranged at a distance from the first welding device greater than the distance between the first support pin and the first welding device.

Thus, the operation of loading and preparing the first reel for use are even safer.

In fact, the operator who handles the wrapping tape of the first reel to insert it into the carriage, operates in an area particularly distant from the welding device.

A further aspect of the invention provides that said carriage may comprise a lower bar and an upper bar selectively foldable on top of each other to hold said initial section of the wrapping tape of the first reel.

Thanks to this solution, the architecture of the gripping member is particularly simple and effective, as well as intuitive to use.

Furthermore, a further aspect of the invention provides that the carriage may comprise at least one contact element associated with the lower bar and adapted to make available a support surface for a first surface (the lower one) of the wrapping tape.

This support surface is anti-slip, i.e. has adhesion (i.e. it has roughness or other characteristics such as to create friction with the wrapping tape), in other words, this support surface defines a friction with said first surface of the wrapping tape such as to avoid or in any case limit the possibility of the wrapping tape slipping on it.

Thanks to this solution, a contact surface for the wrapping tape is made available which prevents the tape, which is later tensioned, from slipping out of the grip of the carriage. For example, such a contact element may preferably be made of rubber.

Another aspect of the invention provides that the carriage may comprise:
- an abutment body adapted to contact a second surface (the upper one) of the wrapping tape opposite to the first surface (i.e. the lower one), said abutment body being mounted on the upper bar and being movable relative thereto along a direction moving closer to/away from the lower bar, and
- an elastic element associated with the abutment body and configured to push it towards the lower bar along said movement direction.

Thanks to this solution, the wrapping tape is effectively held between the lower and upper bars, in order to avoid positioning distortions and at the same time slippage of the wrapping tape resulting in a wrong positioning thereof.

Another aspect of the invention provides that the upper bar may be hinged to the lower bar and be movable in rotation about the hinge axis between an open position, wherein a longitudinal end of the upper bar that is distal from the hinge axis is distant (i.e. distal) from the lower bar, and a closed position wherein said longitudinal end of the upper bar that is distal from the hinge axis, is close (i.e., proximal) to the lower bar, and that the carriage may comprise at least one elastic element, for example a pair of elastic elements, in the form of compression springs, each of which is configured to push the upper bar towards the open position.

Thanks to this solution, the upper bar is normally kept, i.e. in the absence of forces acting thereon pushing it into the closed position (as opposed to the action of each elastic element), in the open position, thus obviating the possibility that during the tape preparing operations the upper bar may inadvertently move into the closed position, crushing the operator's fingers or otherwise hitting him.

Still, another aspect of the invention provides that the feeding unit may comprise a second welding device configured to weld an end section of the second reel with a section of wrapping tape of the first reel, and wherein the carriage is further movable along the flanking direction from a second receiving position wherein it is adapted to receive said end section of the second reel to a second welding position wherein it makes said end section available to the second welding device for welding it to said section of wrapping tape of the first reel.

Thanks to this solution, the feeding unit is further configured to allow safely replacing the second reel when the latter runs out.

A further aspect of the invention provides that the feeding unit may comprise an electronic control unit operatively connected to the actuation unit and configured to selectively actuate it.

Thanks to this solution, the movement of the carriage is automated, making operations particularly fast, repeatable, precise and safe.

Moreover, a further aspect of the invention provides that the electronic control unit can be configured to actuate the actuation unit to move the carriage respectively from the first receiving position to the first welding position only upon receipt of a command signal. Thanks to this solution, the operability of the wrapping machine is particularly effective in minimising production errors and/or downtime.

In particular, this command signal can be sent to the electronic control unit by means of a controller (e.g. a push-button provided on a control panel) available to an operator.

A further aspect of the invention provides that the electronic control unit can be configured to:
- check whether the second reel is being depleted, and
- actuate the carriage from the first receiving position to the first welding position if the check is positive.

Thanks to this solution, as long as the first reel is not to be used as a feeding reel, the carriage is kept in the first receiving position, where the wrapping tape can be comfortably and safely handled by the operator.

Thanks to this solution, the residence time of the carriage in the first receiving position is maximised in relation to the need to feed the wrapping tape to the wrapping unit of the wrapping machine, maximising the time available to the operator for preparing the wrapping tape.

Still another aspect of the invention provides that the feeding unit may further comprise a first shear actuated by a respective actuator, and may be configured to exert pressure (substantially orthogonally) on a residual section of the second reel (placed immediately upstream of the welding bar of the first welding device relative to the unwinding direction of the second reel, and simultaneously also on a portion of the end section of the first reel which is defined between the welding bar and the carriage where it is held).

Another aspect of the invention provides that the electronic control unit can be operatively connected to the first welding device, to a rotating drive motor of the second support pin, and to the (motor of the) drive unit moving the carriage and configured to:
- actuate the first welding device to weld the initial section of the wrapping tape of the first reel with the section of the wrapping tape of the second reel, and then,
- actuate the carriage in a direction moving away from the first support pin, and
- actuate the second support pin around its respective rotation axis in one direction to rewind the wrapping tape onto the second reel.

Thanks to this solution, the feeding unit is able to achieve the welding of the end section of the first reel with said section of the second reel, so that the first reel can in turn act as the feeding reel, and at the same time allows to tear, in a particularly precise way, the remaining wrapping tape of the second reel (and also a portion of said exceeding end section of the wrapping tape that remains between the welding bar of the first welding device and the carriage where it is held).

Moreover, another aspect of the invention provides that the electronic control unit can be operatively connected to an actuator for actuating the first shear and can be configured, before actuating the carriage along the flanking direction in a direction moving away from the first support pin and actuating the second support pin about a respective rotation axis in a direction to rewind the wrapping tape on the second reel, to operate the first reel so as to exert pressure (e.g. predominantly orthogonally) on said (residual) section of the tape of the second reel and simultaneously actuate the support pin so as to rotate the second reel in a direction to rewind the wrapping tape on the second reel.

Thanks to this solution, the feeding unit is even more effective in eliminating the residual wrapping tape of the first reel and the second reel following welding.

One aspect of the invention provides that the feeding unit may comprise a locking device, which is adapted to lock the wrapping tape upstream of a tensioning unit of the wrapping machine (relative to the advancement direction of the wrapping tape itself), and that the electronic control unit may be operatively connected to the locking device and configured to actuate it, so as to lock the wrapping tape, before actuating the first welding device to weld the end section of the wrapping tape of the first reel with the section of the wrapping tape of the second reel.

Similarly, the electronic control unit can be operatively connected to the locking device and configured to activate it in order to lock the wrapping tape, before activating the second welding device to weld the end section of the wrapping tape of the second reel with the section of the wrapping tape of the first reel.

A further aspect of the invention provides that said support frame may delimit a housing compartment adapted to house (at least) the first support pin, the second support pin, the carriage and the actuation unit and that the feeding unit may comprise:
- a pair of doors, each associated with a respective one of two distinct openings (or windows) to access the housing compartment, wherein each of said openings opens at only one of the first support pin and the second support pin, each door being movable between an open position wherein it allows access to the respective window and a closed position wherein it prevents access to the respective window, and
- a pair of magnetic interlocks, each of which is associated with a respective door and configured to detect the closing position assumed by it.

Such magnetic interlocks can preferably be without mechanical locking, i.e. they can preferably be simply (and only) used to detect the closed position of the respective door. Furthermore, a further aspect of the invention provides that the electronic control unit can be operatively connected to each of said magnetic interlocks and further configured to actuate the carriage from the first receiving position to the first welding position only if the door accessing to the first support pin is in the closed position.

This makes the operation of the feeding unit even safer.

In practice, the operator cannot access the housing compartment at the carriage when this moves along the flanking direction.

Another aspect of the invention provides that the feeding unit may comprise a pair of magnetic safety interlocks with electromechanical locking, hereinafter referred to as "electromechanical interlocks", as an alternative to magnetic interlocks, each of which is associated with a respective door and operable between a locking configuration wherein it locks the respective door in the closed position and a rest configuration wherein it allows to move the door from the closed position to the open position, and that the electronic control unit may be operatively connected to each electromechanical interlock and configured to selectively actuate it in the locking configuration.

Thanks to this solution, the feeding unit is provided with an automated system that is able to selectively prevent the opening of the door, for instance under certain operating conditions (of the feeding unit or of the wrapping machine in general) that are predetermined and pre-set or that can in any case be set in the electronic control unit.

Further, another aspect of the invention provides that the welding device may comprise:
- a welding bar, mounted on a carriage, moving along a direction closer to/away from a matching bar which receives in support said end section of the first reel and said section of the second reel (in an area of mutual overlap),
- an actuator connected to the carriage of the welding bar and configured to actuate it along said movement direction.
and that the electronic control unit can be operationally connected to said actuator and configured to selectively actuate it.

Thus, the feeding unit (and the wrapping machine) is particularly safe for the operator, who will not have to use the welding device, thus avoiding possible operator injuries. Another aspect of the invention provides that the feeding unit may comprise a magnetic interlock configured to detect when the carriage of the welding bar is in a lowered position (also known as a low protection position) or in a welding position.

Thanks to this solution, the low protection position of the welding bar can be safely checked.

Still another aspect of the invention provides that each welding device may comprise one or more gas springs configured to push the carriage of the respective welding bar, i.e. the respective welding bar, to a rest position.

In this rest position, the welding bar is raised, i.e. it is distant from the respective matching bar.

Thanks to this solution, when the welding bar is not actuated (e.g. by a respective actuator) in the low protection or welding position, this gas spring ensures that the welding bar remains in the rest position, thus making the feeding unit particularly safe.

The invention further makes available a wrapping machine comprising:
- a feeding unit according to one or more of the aspects described above, and
- a wrapping unit configured to receive the tape from the feeding unit and to wrap it around a product to be wrapped.

Thanks to this solution, the invention makes available an overall particularly safe wrapping machine.

A further aspect of the invention provides that the wrapping machine may comprise a structure and a side protection bulkhead, said side protection bulkhead being adapted to cover the housing compartment of the feeding unit, said side protection bulkhead being defined by a door sliding relative to this structure between a closed position wherein it covers and protects the housing compartment, and an open position wherein it uncovers the housing compartment, said side protection bulkhead making available said two distinct access openings to the housing compartment of the feeding unit, and wherein said doors of the feeding unit are movably mounted between the open position and the closed position on said side protection bulkhead.

The invention still makes available a unit for feeding a wrapping tape for a wrapping machine, said feeding unit comprising:
- a support frame,
- at least one support pin rotatably associated with the support frame, and adapted to receive a reel of wrapping tape,
- a welding device adapted to weld an end section of the reel wrapping tape with a residual section of another wrapping tape,
- a carriage adapted to receive and hold said end section of the wrapping tape of the reel and movable from a receiving position wherein it is adapted to receive said end section of the reel to a welding position wherein it makes said end section available to the welding device for welding it to said residual section of the other wrapping tape,
- a drive unit connected to the carriage and configured to move it between the receiving position and the welding position.

### BRIEF DESCRIPTION OF THE DRAWINGS

Further features and advantages of the invention will be more apparent after reading the following description provided by way of a non-limiting example, with the aid of the figures shown in the accompanying tables.
Figure 1 is a front side view of a wrapping machine provided with a feeding unit according to the invention.
Figure 2 is a schematic section view along a vertical plane of a part of the wrapping machine, wherein a feeding unit for feeding a wrapping tape is better visible.
Figure 3 is an enlarged view of a portion of Figure 2, wherein said feeding unit is further better visible with a carriage positioned in a first receiving position wherein it is ready to receive an end section of a first reel, and an enlargement wherein a locking device thereof is visible.
Figure 4 is the view of Figure 3, where the carriage has received said end section of a first reel and wherein a second reel is depleted/being depleted.
Figure 5 is the view of Figure 4, with the carriage arranged in a first welding position and with a first welding bar in a rest position and a second welding bar in a lowered position (low protection or gap-closing position).
Figure 6 is the view of Figure 5 with the first welding bar in the welding position.
Figure 7 is the view of Figure 6 with a first shear in the lowered position and the carriage moved towards a second receiving position.
Figure 8 is the view of Figure 7 with the carriage positioned in the second receiving position wherein it is adapted to receive the end section of a new second reel, and with the first reel just starting up.
Figure 9 is a view of Figure 8, wherein the first reel is being depleted, a new second reel has been inserted, and the carriage is arranged in a second welding position. In addition, a second welding bar is located in the welding position.
Figure 10 is a front view of the carriage of the wrapping machine, shown in the open position.
Figure 11 is a section view of the carriage in Figure 7, shown in the closed position.
Figure 12 is a perspective view of the carriage in Figure 7, shown closed in a second receiving position.
Figure 13 is an enlarged view of a portion of the feeding unit wherein a first and second welding device and a first and second shear are better visible. In addition, the second welding bar is in a lowered protection position.

### BEST MODE TO IMPLEMENT THE INVENTION

With particular reference to these figures, a wrapping machine configured to wrap a product P with a wrapping tape 15 has been globally referred to as 10.

In this description, product P means an object to be wrapped individually or a batch of objects (of a predefined number) that are arranged in an orderly manner and are to be wrapped together by the wrapping tape 15 to define a single unit.

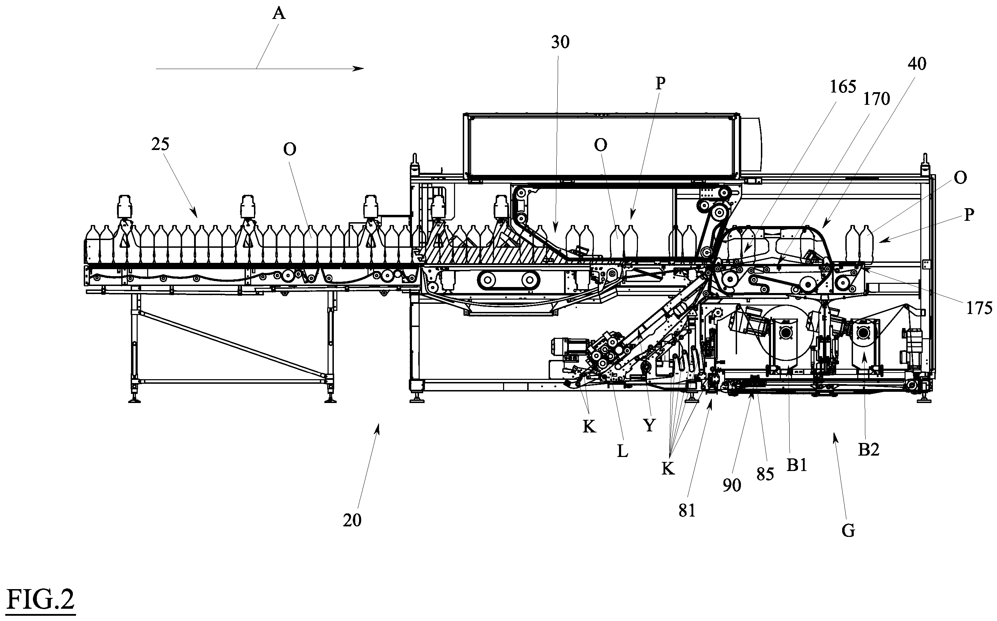

The latter is, for example, the case of the wrapping machine 10 shown in the figures, where product P, as visible in Figure 2, consists of a batch of objects O, e.g. bottles of water, which are wrapped by the wrapping tape 15 to define a bundle (or package).

In particular, the wrapping machine 10 can be of the shrink-wrapping or, better, the heat shrink-wrapping type.

That is, the wrapping machine 10 can wrap the product P with a wrapping tape 15 that is made of a (generally plastic or polymeric) heat-shrinkable material.

The wrapping machine 10 comprises, first of all, a rigid structure 20 (e.g. predominantly made of metal), i.e. not deformable when subjected to the usual loads for which it is intended, provided with common ground-bearing supports.

The structure 20 supports an advancement unit that allows objects O to be advanced, one at a time, along an advancement direction A (e.g. substantially horizontal in the figures).

In particular, the advancement unit may be adapted to advance objects O by parallel rows, wherein the products O in each row are aligned along the advancement direction A.

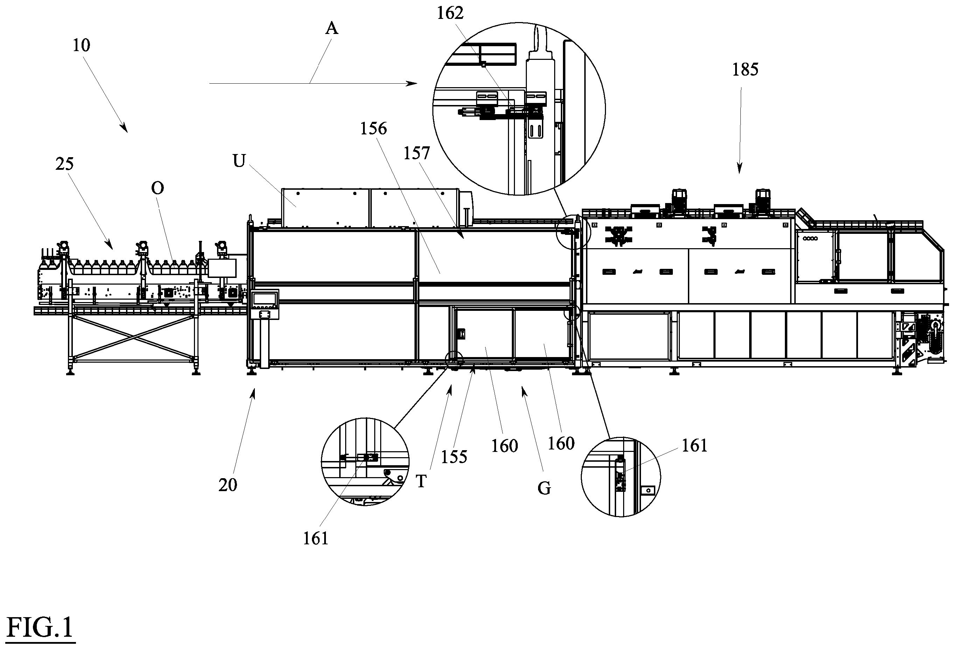

Therefore, although only one row of products O is visible in Figures 1 and 2, it is provided that there can be more than one row, arranged side by side in a direction transverse to the advancement direction A.

The advancement unit comprises, first of all, a first conveyor 25 e.g. of the belt type, which makes available a first support plane movable along the advancement direction A.

The first conveyor 25 may in particular comprise either one or more flexible members, e.g. one or more modular plastic mats, each of which is closed on itself in a loop and is wound around at least one moving axis provided with driving pinions, driven in rotation by a respective electric motor, and at least one return axis.

Each flexible member has an upper branch, e.g. substantially horizontal, which makes available said first support plane.

The advancement unit may then comprise a second conveyor 30, e.g. of the modular belt type, which receives the objects O from the first conveyor 25 and is placed downstream thereof relative to the advancement direction A.

The second conveyor 30 comprises a number of flexible members equal to the number of rows of objects O placed on the first conveyor 25, e.g. a series of single-lane modular mats (i.e. individually adapted to receive and advance a single row of products), each of which is closed on itself in a loop and is wound on at least one drive pinion, driven in rotation by a respective electric motor, and at least one return axis.

This flexible member has an upper branch, e.g. substantially horizontal, which makes a second support plane available, and which lies substantially coplanar to the upper branch of the flexible member of the first conveyor 25.

In other words, the first support plane and the second support plane can be substantially coplanar.

The second support plane is associated with a separating device, known in itself and therefore not described in detail, configured to space objects O apart from each other along the advancement direction A, so as to separate them into groups, each representing a product P to be wrapped.

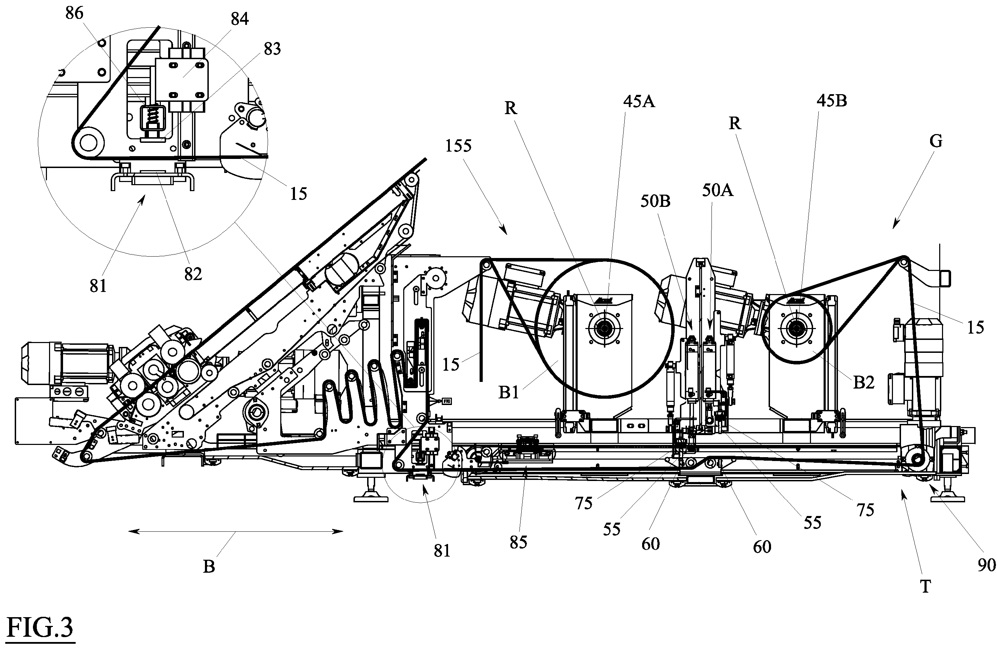

The second conveyor 30 feeds the products P, i.e. the groups of objects O, spaced apart from each other, to a wrapping unit 40, which is configured to wrap the products P with the wrapping tape 15, in particular each product P (i.e. each group of objects O) with a segment (or portion) of said wrapping tape 15, called film, arriving from a feeding unit G. This feeding unit G is better visible in Figure 3.

The feeding unit G comprises, first of all, a rigid support frame T, i.e. not deformable when subjected to the usual loads for which it is intended, e.g. made of metal.

For example, said support frame T may be made available by, or possibly connected to, the structure 20 of the wrapping machine 10.

The feeding unit G then comprises a pair of support pins, of which a first support pin 45A (e.g. the one on the left in the figures) and a second support pin 45B (e.g. the one on the right in the figures).

Each of these support pins 45A and 45B is installed on the support frame T so as to rotate on itself, preferably independently of the other, around a respective rotation axis R, driven in rotation by a respective drive motor.

The first support pin 45A and the second support pin 45B are mutually parallel and placed side by side at a (non-zero) distance from each other along a flanking direction B (e.g. substantially horizontal and orthogonal to the rotation axes R and preferably coincident with the advancement direction A).

The first support pin 45A is adapted to receive a first reel B1 of wrapping tape 15, and the second support pin 45B is adapted to receive a second reel B2 of wrapping tape.

The wrapping tape of each of said reels B1, B2 is wound around a core and has, along its length, an initial section which makes available a fastening flap, by means of which it is fastened to the respective core, and an opposite end section which makes available a free flap of the wrapping tape 15 (and by means of which the wrapping tape 15 can be unwound from the respective reel B1, B2).

The core of each reel B1 and B2 can be coaxially inserted onto the respective support pin 45A and 45B, which is generally provided with a keying device.

This keying device can be activated (e.g. pneumatically) between a rest configuration, wherein the core of the respective reel B1 or B2 is made rotatably idle on the support pin 45A or 45B, and a working configuration, wherein the core of the respective reel B1 or B2 is rotatably integral with the support pin 45A or 45B.

The first reel B1 and the second reel B2 are alternately adapted to feed the wrapping unit 40 with the wrapping tape 15.

Thus, the first reel B1 and the second reel B2 are alternately adapted to act as a feeding reel or reserve reel: while one acts as a feeding reel, the other acts as a reserve reel and vice versa.

In other words, while one of the first reel B1 and the second reel B2 supplies the wrapping tape 15 to the wrapping unit 40, the other between the first reel B1 and the second reel B2 remains idle, and vice versa.

For example, with reference to Figure 3, the second reel B2 is in use as a feeding reel while the first reel B1 acts as a reserve reel.

When the feeding reel, in this case the second reel B2, runs out, i.e. is about to run out, the other reel, in this case the first reel B1, which acted as a reserve reel, is put into operation to act as a feeding reel, in place of the previous one, which can thus be replaced by a new reel.

For this purpose, the feeding unit G comprises a first welding device 50A for welding the end section of the first reel B1 with a residual section of the second reel B2, preferably with a last section still connected to the respective core.

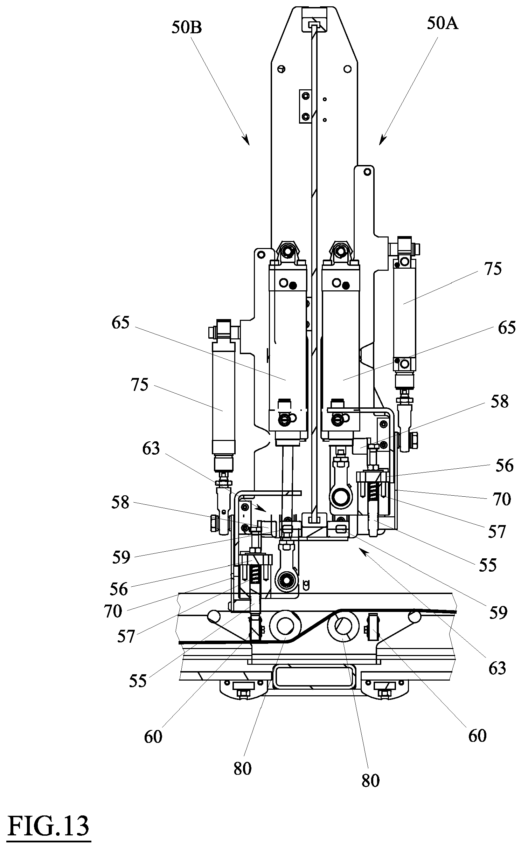

As better visible in Figure 13, this first welding device 50A comprises a welding bar 55 on which an electrical resistance is provided, adapted to heat the end section of wrapping tape 15 of the first reel B1 and said section of wrapping tape 15 of the second reel B2 so as to heat-weld them.

The welding bar 55 is movably associated with the support frame T (which, as mentioned above, can be made available by the structure 20 of the machine 10), so as to move along a direction moving (e.g. substantially vertically) closer to/away from a respective matching bar 60, preferably fixed without residual degrees of freedom to the support frame T, and which can be aligned vertically and placed below the respective welding bar 55.

This matching bar 60 is designed to receive the residual section of wrapping tape 15 from the second reel B2 and the end section of wrapping tape 15 from the first reel B1 in a mutually overlapping area.

During the welding step, said mutually overlapping residual section and end section are pressed between the welding bar 55 and the matching bar 60, and by means of the heat generated by the (electrical resistance of the) welding bar 55 they are (heat) welded to each other.

Preferably, the welding bar 55 can be moved along said movement direction closer to/ away from the respective matching bar 60, by a respective actuator 65.

This actuator 65, particularly of the linear type, comprises a cylinder fixed, preferably without residual degrees of freedom, to the support frame T, and a rod fixed to a carriage 56 (or support frame) on which the welding bar 55 is mounted and movable relative to the cylinder, along a predetermined movement trajectory, between a rearward position, whereby the rod is, for example, completely contained in the cylinder, and a forward position, whereby the rod is, for example, completely (or in any event predominantly) protruding from the cylinder.

The actuator 65 is of course arranged so that said movement trajectory of the rod is parallel to the movement direction (e.g. substantially vertical) of the carriage of the welding bar 55.

The welding bar 55 of the first welding device 50A (with the respective carriage 56) is then movable, along said movement direction, between a rest position, wherein it is distal from the respective matching bar 60, which for example may correspond to the rearward position of the rod, and a lowered position (which may also be called a low protection position) or a welding position (which may coincide) wherein it is proximal (and generally pressed against) the respective matching bar 60, which for example may correspond to the forward position of the rod.

In particular, the welding bar 55 may be connected to the corresponding actuator 65 via said carriage 56, which carries the welding bar 55 and is adapted to move in said movement direction (e.g. substantially vertical) due to the effect of the actuator 65. Springs 57, that are pressed when the welding bar 55 contacts the matching bar 60, can be interposed between the carriage 56 and the welding bar 55.

The first welding device 50A may also comprise one or more gas springs, each of which is configured to push (so as to hold) the carriage of the welding bar 55 in the rest position.

In this case, the movement of the welding bar 55 into the low protection position or into the welding position by the actuator 65 occurs against the elastic force of said one or more gas springs.

The first welding device 50A may also comprise a magnetic interlock, collectively referred to as 63, which is adapted to detect when the welding bar 55 is in the lowered position.

In this lowered position, the welding bar 55 of the first welding device 50A is proximal to the respective matching bar 60, i.e. physically in the same position as when it is in the welding position, but (unlike in the welding position) the electrical resistance of the welding bar is switched off (i.e. no electric current is flowing through it and it therefore does not heat).

In this lowered position, the welding bar 55 substantially acts as a physical protection barrier.

This magnetic interlock 63 may comprise a magnetic element (passive, i.e. not electrically powered) 58, which is fixed on the carriage 56 and is adapted to magnetically interact with a corresponding magnetic matching element 59 (active, i.e. electrically powered) installed on a fixed frame of the welding device 50A, i.e. fixed relative to the support frame T of the feeding unit G.

Specifically, when the welding bar 55 is in the (raised) rest position, the magnetic element 58 is spaced from the magnetic matching element 59, without having any magnetic interaction with it.

When, on the other hand, the welding bar 55 is in the lowered position, the magnetic element 58 is proximal to the magnetic matching element 59, and therefore has a magnetic interaction with it, which enables to safely and reliably detect that the welding bar 55 has reached and is actually in the aforesaid lowered position.

Obviously, when the first reel B1 runs out, i.e. is about to run out, the new second reel B2, located on the second pin 45B, is put into operation in place of the previous one. For this purpose, the feeding unit comprises a second welding device 50B which is adapted to weld the end section of the second reel B2 with a residual section of the first reel B1, preferably with a last section still connected to the respective core.

The second welding device 50B is structurally homologous to the first welding device 50A. This second welding device 50B therefore comprises a respective welding bar 55 on which an electrical resistance is provided, adapted to heat the end section of the wrapping tape 15 of the second reel B2 and said residual section of the wrapping tape 15 of the first reel B1 so as to heat-weld them.

The welding bar 55 is movably coupled to the structure 20 of the machine 10, so as to move along a direction moving (e.g. substantially vertically) closer to/away from a respective matching bar 60, which is preferably fixed without residual degrees of freedom to the support frame T and can be aligned vertically and placed below the respective welding bar 55.

This matching bar 60 is adapted to receive said residual section of wrapping tape 15 of the first reel B1 and the end section of wrapping tape 15 of the second reel B2 in a mutually overlapping area.

During the welding step, said residual section and said mutually overlapping section are pressed between the welding bar 55 and the matching bar 60 of the second welding device 50B, and by means of the heat generated by the (electrical resistance of) welding bar 55 are (heat) welded to each other.

Preferably, the welding bar 55 of the second welding device 50B can also be moved along said direction of movement closer to/away from the respective matching bar 60, by a respective actuator 65.

Such an actuator 65, particularly of the linear type, comprises a cylinder fixed, preferably without residual degrees of freedom, to the support frame T, and a rod fixed to a carriage 56 (or support frame) on which the welding bar 55 is mounted and movable relative to the cylinder, along a predetermined movement trajectory, between a rearward position, whereby the rod is, for example, completely contained in the cylinder, and a forward position, whereby the rod is, for example, completely (or in any event predominantly) protruding from the cylinder.

The actuator 65 is of course arranged so that said movement trajectory of the rod is parallel to the movement direction (e.g. substantially vertical) of the carriage of the welding bar 55.

The welding bar 55 of the second welding device 50B (with the respective carriage 56) is then movable, along said movement direction, between a rest position, wherein it is distal from the respective matching bar 60, which may for example be corresponding to the rearward position of the rod, and a lowered position (which may also be called a low protection position) or a welding position (which may coincide), wherein it is proximal (and generally pressed against) the respective matching bar 60, which may for example be corresponding to the forward position of the rod.

In particular, the welding bar 55 may be connected to the corresponding actuator 65 via said carriage 56, which carries the welding bar 55 and is adapted to move in said movement direction (e.g. substantially vertical) due to the effect of the actuator 65. Springs 57, that are pressed when the welding bar 55 contacts the matching bar 60, can be interposed between the carriage 56 and the welding bar 55.

The second welding device 50B may also comprise one or more gas springs each of which is configured to push (so as to hold) the carriage of the welding bar 55 in the rest position.

In this case, the movement of the welding bar 55 into the lowered position or into the welding position by the respective actuator 65 occurs against the elastic force of said one or more gas springs.

The second welding device 50B may also comprise a magnetic interlock, collectively referred to as 63, which is adapted to detect when the welding bar 55 is in a respective lowered position.

In this lowered position, the welding bar 55 of the second welding device 50B is proximal to the respective matching bar 60, i.e. physically in the same position as when in the welding position, but (unlike in the welding position) the electrical resistance of the welding bar is switched off (i.e. no electric current is flowing through it and it therefore does not heat).

In this lowered position, the welding bar 55 substantially acts as a physical protection barrier.

This magnetic interlock 63 may comprise a magnetic element 58 (which may be passive, i.e. not electrically powered), which is fixed on the carriage 56 and is adapted to magnetically interact with a corresponding magnetic matching element 59 (which may be active, i.e. electrically powered) installed on a support frame T of the welding device 50B, i.e. fixed relative to the support frame T of the feeding unit G.

Specifically, when the welding bar 55 is in the (raised) rest position, the magnetic element 58 is spaced from the magnetic matching element 59, without having any magnetic interaction with it.

When, on the other hand, the welding bar 55 is in the lowered position, the magnetic element 58 is proximal to the magnetic matching element 59, and therefore has a magnetic interaction with it, which enables to safely and reliably detect that the welding bar 55 has reached and is actually in the aforesaid lowered position.

The first welding device 50A and the welding device 50B are placed side by side, at a non-zero distance from each other, along the flanking direction B.

Specifically, the first welding device 50A is proximal to the second support pin 45B, while the second welding device 50B is proximal to the first support pin 45A.

Furthermore, the distance between the first welding device 50A and the second support pin 45B, relative to said flanking direction is preferably equal to the distance (along the same flanking direction) between the second welding device 50B and the first support pin 45A.

The feeding unit G can optionally also comprise a pair of (homologous) shears 70, with a first shear 70 associated with the first welding device 50A and a second shear 70 associated with the second welding device 50B.

The first shear 70 is configured to exert pressure, for example predominantly along a direction orthogonal (or substantially orthogonal) to the wrapping tape, (for example without cutting, or also by cutting) on the residual section of the second reel B2, placed immediately upstream of the welding bar 55 of the first welding device 50A (relative to the unwinding direction of the second reel B2, as well as to exert pressure, without cutting or cutting, on a portion of the end section of the wrapping tape of the first reel B1 which overlaps said residual section of the wrapping tape of the second reel immediately upstream of the first welding device 50A).

Similarly, the second shear 70 is configured to exert pressure, for example predominantly along a direction orthogonal (or substantially orthogonal) to the wrapping tape, (for example without cutting, or also by cutting) on the end section of the first reel B1, placed immediately upstream of the welding bar 55 of the second welding device 50B (relative to the unwinding direction of the first reel B1, as well as to exert pressure on a portion of the end section of the wrapping tape of the second reel B2 which overlaps said residual section of the wrapping tape of the first reel immediately upstream of the second welding device 50B).

Each shear 70 comprises a pressor body, e.g. made of metal, sliding (with or without clearance) along the respective welding bar 55 along (a trajectory parallel to) the movement direction (e.g. substantially vertical).

Such a pressor body can for example be made in the form of a rectangular-section plate. This pressor body can be installed on the carriage 56 of the corresponding first or second welding device 50A or 50B, so as to be adapted to move together with the respective welding bar 55 due to the actuator 65.

In addition, each shear 70 comprises a respective further actuator 75, connected to said pressor body and also preferably installed on the carriage 56, which is configured to move the pressor body in a vertical direction relative to the respective welding bar 55.

The actuator 75 is also preferably of the linear type and can consist of a cylinder with a sliding rod.

By means of this further actuator 75, when the welding bar is in the welding position (in contact with the respective matching bar 60), the pressor body of the shear 70 can be further moved between a raised position, wherein it exerts no pressure on the residual section of the wrapping tape 15, and a lowered position, wherein it exerts pressure on the residual section of the wrapping tape 15.

In particular, this pressor body of the shear 70, for example said rectangular-section plate, may have one end hinged to said carriage 56 relative to a hinge axis parallel to the direction B and an opposite free end.

The actuator 75 moves the pressor element around said hinge axis so that in the lowered position the free end of the pressor body of the shear is at a lower height than that of the matching bar 60.

This rotary movement around the hinge axis causes the first contact between the pressor element and the wrapping tapes 15 to occur at one side end of the tapes.

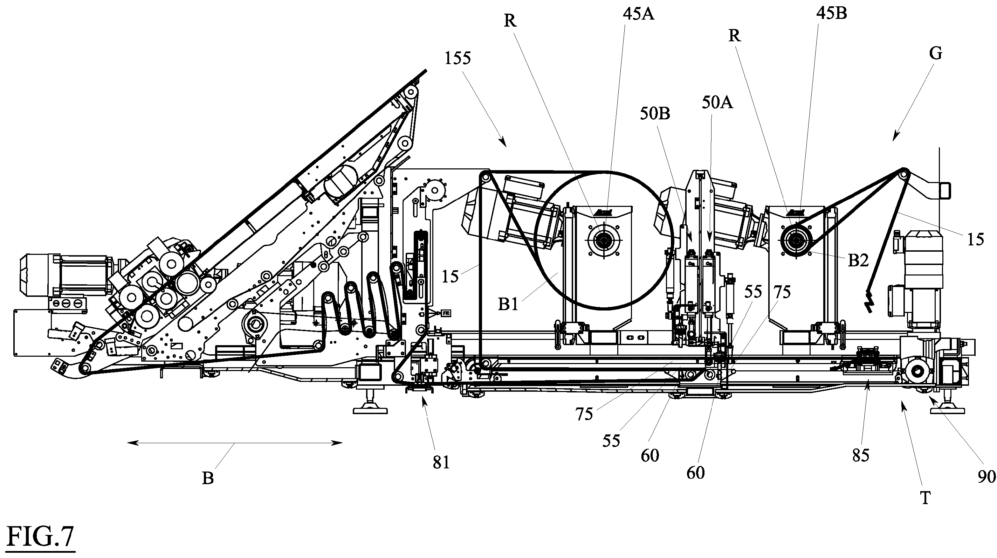

In the lowered position, as for example visible in Figure 7, the pressor body is arranged at a lower vertical height than the vertical height at which the matching bar 60 of the respective welding device 50A, 50B is placed.

In order to accurately detect the position of the pressor body of each shear 70, sensors for the relative position between the rod and cylinder of the actuator 75, as well as a pilot-operated check valve for the upper position are also provided.

As clearly appreciable in Figure 13, the feeding unit G may further comprise a pair of idle rollers 80, which are mutually parallel and place side by side at non-zero distance from each other along the flanking direction B, and furthermore rotatable (in an idle mode) about respective rotation axes parallel to the rotation axes of the reels.

In particular, in relation to the flanking direction B), these rollers 80 are interposed between the matching bars 60 of the first welding device 50A and the second welding device 50B.

A gap is defined between said rollers 80, which makes available an inlet of the wrapping tape 15 towards a feed track of the wrapping machine 10, through which the wrapping tape 15 reaches the wrapping unit 40.

This feed track causes the wrapping tape 15 to run along a predefined path, in a tensioned and stretched manner, until it arrives (one film at a time as will be seen below) at the inlet of the wrapping unit 40.

The feed track can substantially have a first section followed by a second section.

The first section comprises a tensioning unit made up of a plurality of rollers, all of which have been referred to as K in Figure 2, some of which are idle, and others, which are actuated by respective actuators such as of the pneumatic type, act as tape tensioners. Downstream of the tensioning unit, in relation to the travel direction of the wrapping tape 15, the first section of the feed track also comprises cutting means L that separate the wrapping tape 15 into pieces (or portions) of a predetermined length that define the aforementioned individual "films".

Such cutting means L, as for example shown in Figure 2, comprise a pair of opposite motorised counter-rotating elements, between which the wrapping tape 15 slides, of which an upper element supports a cutting member, such as a blade, and an opposite lower element, known as a counter-blade, which has a corresponding cavity into which the blade penetrates.

The first section of the feed track further comprises two pairs of opposite rollers, between which the wrapping tape 15 is adapted to slide, one pair of rollers placed upstream of the cutting means (relative to the feed direction of the wrapping tape 15 to the wrapping unit 40) and one pair of rollers placed downstream of the cutting means (relative to the feed direction of the wrapping tape 15 to the wrapping unit 40).

Each pair of opposite rollers may comprise a motorised roller and an idle roller.

In particular, the rotation of the pair of rollers upstream of the cutting means L, known as the film unwinder, allows the wrapping tape 15 to be dragged and fed to the cutting means L.

The rotation of the pair of rollers downstream of the cutting means L, on the other hand, allows to pre-stretch the wrapping tape 15 before cutting, as well as to drag the films obtained from the cutting means L forward towards the wrapping unit 40.

The second section of the feed track comprises a conveyor Y, e.g. of the belt type, provided with an upper branch, which makes available a support plane, and which extends to (i.e. at) an inlet of the wrapping unit 40.

This conveyor Y is adapted to receive, resting on said support plane, the film obtained from the cut of the wrapping tape 15, and dragged forward by the pair of rollers downstream of the cutting means L, and to inlet it to the wrapping unit 40.

The feed track outlined above is however known in itself and is therefore not described in further detail.

Instead, an aspect of the invention provides that the feeding unit G may comprise a locking device 81, which is adapted to lock the wrapping tape 15 upstream of the tensioning unit (relative to the tape advancement direction), for example in the section between the latter and the rollers 80, preferably in a position proximal to the inlet of the tensioning unit. As it is clearly visible in the detail of Figure 3, this locking device 81 can comprise two mutually opposite bars, between which the wrapping tape 15 passes along its path, one fixed bar 82 and one movable bar 83.

The movable bar 83 can move closer to/ away from the fixed bar 82, for example by moving in a vertical direction, to occupy alternately a release position (visible in Figure 3), wherein it is spaced from the fixed bar 82, so as to allow the wrapping tape 15 to slide freely between them, and a locking position, wherein it is close to the fixed bar 82, so as to press the wrapping tape 15 against the latter, blocking it.

The movement of the movable bar 83 between these two positions can be originated by an actuator, preferably of the linear type and pneumatically actuated, which can be adapted to move a cart 84, on which the movable bar 83 is installed.

Springs 86, which are pressed when the movable bar 83 contacts the fixed bar 82, can be interposed between this cart 84 and the movable bar 83.

Returning to the feeding unit G, it comprises a carriage 85 which is movable along the flanking direction B driven by a drive unit 90.

The carriage 85 is, in particular, configured to receive and hold the end section of the wrapping tape 15 (alternatively) of the first reel B1 or the second reel B2 and to drag it along the flanking direction B.

During the dragging step, the keying device can be left in a rest configuration, so that the reel core can rotate idle (sliding) on the associated support pin.

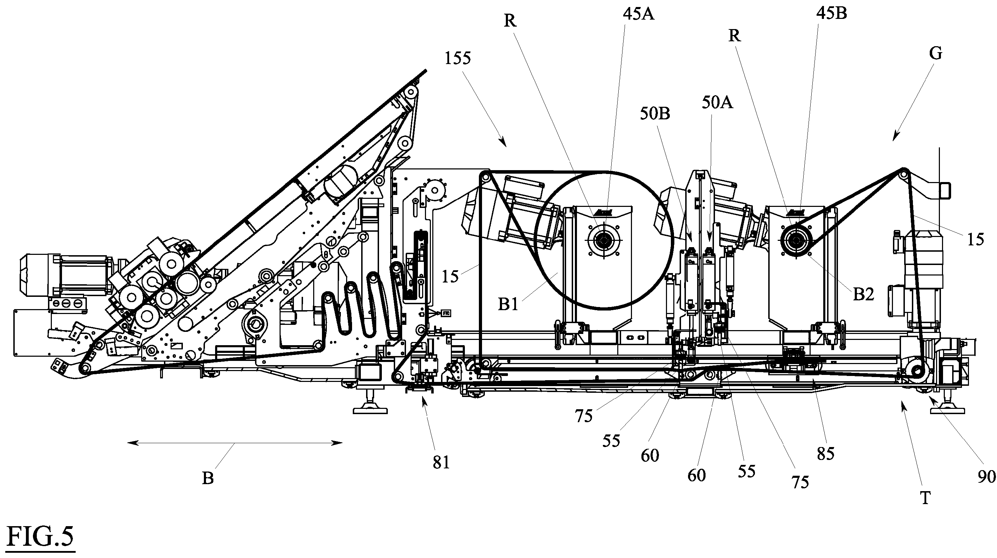

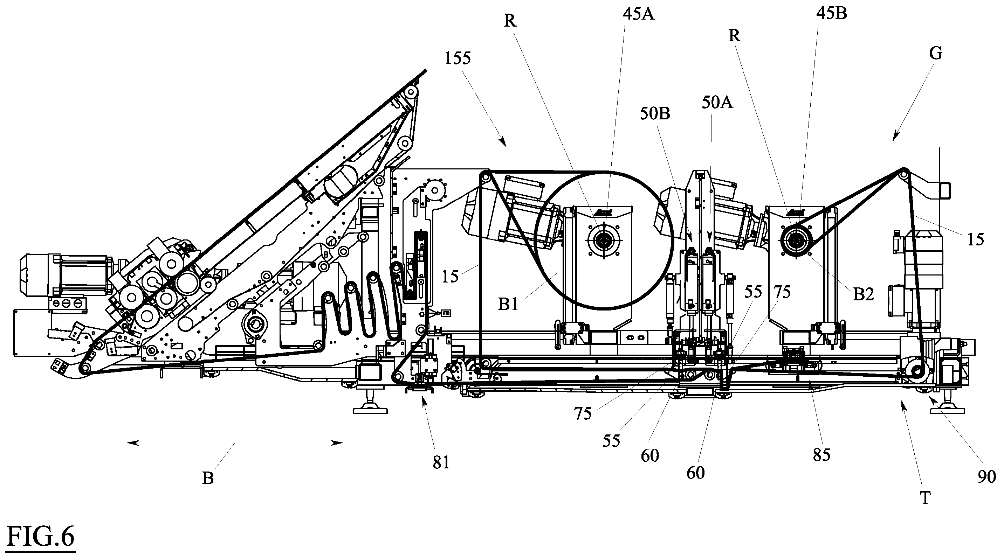

The carriage 85, moving along the flanking direction B, can be selectively stopped in a first receiving position (visible in Figure 3), wherein it is adapted to receive the end section of the first reel B1, and in a first welding position (visible in Figures 5 and 6), wherein it makes said end section (or a portion thereof) available to the first welding device 50A for welding it to the section of the wrapping tape of the second reel B2.

In the first receiving position, the carriage 85 is arranged on the opposite side of the second support pin 45B relative to the first welding device 50A, i.e. the first welding device 50A is interposed (along the flanking direction B) between the second support pin 45B and the carriage 85 in the first receiving position.

In this first receiving position, the carriage 85 is also preferably arranged at a distance (along the flanking direction B) from the first welding device 50A greater than the distance between the latter and the first support pin 45A.

In the first welding position, the carriage 85 is arranged on the opposite side of the first support pin 45A relative to the first welding device 50A, i.e. the first welding device 50A is interposed (along the flanking direction B) between the first support pin 45A and the carriage 85 in the first welding position.

In this first welding position, the carriage 85 may be at any distance from the first welding device 50A, provided that, from this first welding position, the drive unit 90 is still able to move the carriage 85 away from the first welding device 50A (for the reasons explained below).

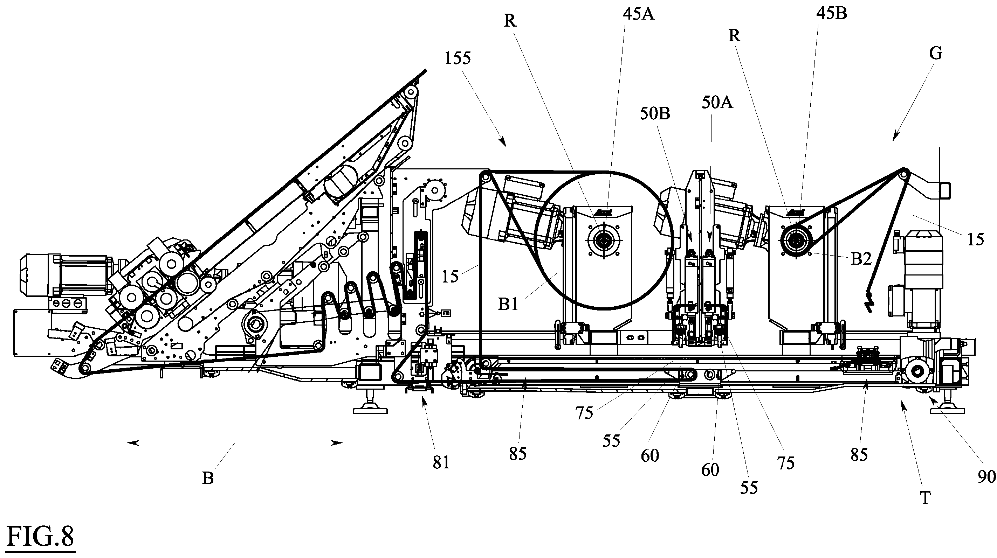

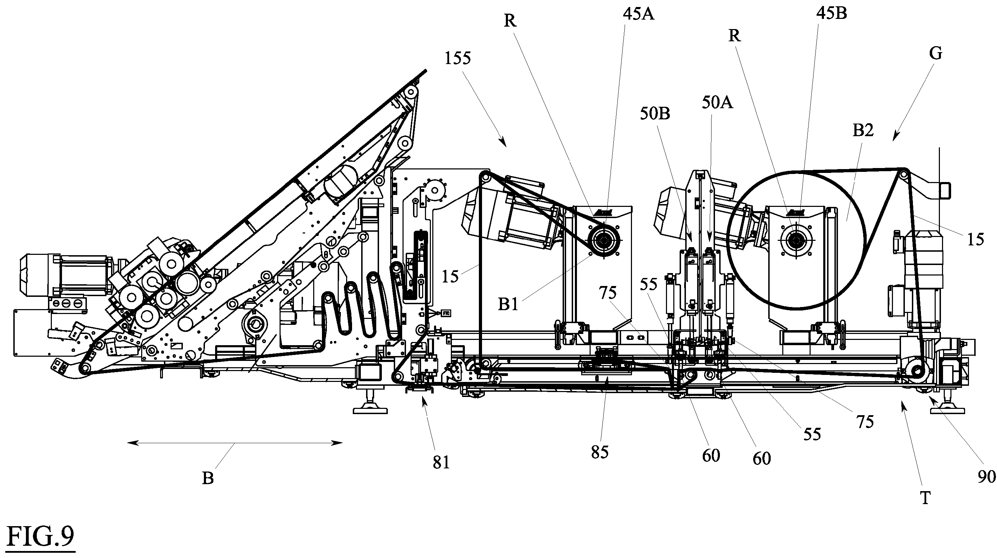

Moving along the flanking direction B, the carriage 85 can be also selectively stopped in a second receiving position (visible in Figure 8), wherein it is adapted to receive the end section of the second reel B2, and in a second welding position (visible in Figure 9), wherein it makes said end section available to the second welding device 50B for welding it to the section of the wrapping tape of the first reel B1.

In the second receiving position, the carriage 85 is arranged on the opposite side of the first support pin 45A relative to the second welding device 50B, i.e. the second welding device 50B is interposed (along the flanking direction B) between the first support pin 45A and the carriage 85 in the second welding position.

In this second receiving position, the carriage 85 is also preferably arranged at a distance (along the flanking direction B) from the second welding device 50B greater than the distance between the latter and the second support pin 45B.

In particular, the second receiving position (shown in Fig.8) can be specular, relative to a vertical median plane between the two reel pins parallel to the rotation axes thereof, to the first receiving position (shown in Fig.3) and both of them can define the end positions of the stroke allowed to the carriage 85 along the flanking direction B.

In the second welding position, the carriage 85 is arranged on the opposite side of the second support pin 45B relative to the second welding device 50B-, i.e. the second welding device 50B is interposed (along the flanking direction B) between the second support pin 45B and the carriage 85 in the second welding position.

In this second welding position, the carriage 85 can be at any distance from the second welding device 50B, preferably provided that, from said second welding position, the drive unit 90 is still able to move the carriage 85 away from the second welding device 50B (for the reasons which will be explained below).

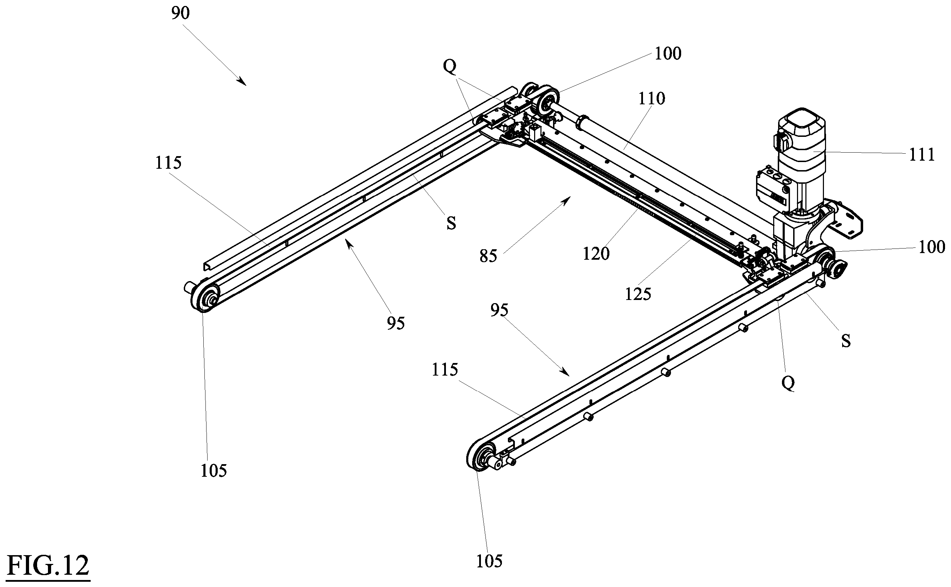

Referring in particular to Figure 12, the drive unit 90 of the carriage 85 may comprise a pair of flexible members 95, homologous and parallel to each other, each of which is wound around a respective drive pulley 100 and a respective driven pulley 105.

The drive pulley 100 and the driven pulley 105 are rotated about their respective rotation axes parallel to the support pins 45A and 45B (i.e. the rotation axes defined by them for the reels B1 and B2 of the wrapping tape 15).

The drive pulleys 100 are connected to each other by a drive shaft 110, which is connected to an electric motor 111 that actuates it in rotation.

The upper branches 115 of said flexible members 95 extend longitudinally along the flanking direction B, are mutually parallel and substantially coplanar, and also move synchronously along said flanking direction B.

In particular, said upper branches 115 of the flexible members 95 extend along said flanking direction B and each has, relative to said flanking direction B, a first end placed upstream of the first support pin 45A and a second end placed downstream of the second support pin 45B.

The carriage 85 is connected to said flexible members 95, i.e. to the upper branches 115 thereof, so as to move along the flanking direction B together with them.

Still referring to Figure 12, the carriage 85 may comprise a lower bar 120, which is rigid, i.e. not deformable when subjected to the usual loads for which it is intended, e.g. made of metal.

The lower bar 120 has, along its longitudinal extension a first longitudinal end fixed to the upper branch 115 of one of said flexible members 95 of the carriage 85 and a second longitudinal end fixed to the upper branch 115 of the other flexible member 95 of the carriage 85.

In particular, the lower bar 120 is arranged (i.e. fixed to said upper branches 115 of the flexible members 95) so as to extend longitudinally parallel to the support pins 45A and 45B, i.e. parallel to the rotation axes R defined by them for the respective reels B1, B2 of wrapping tape 15.

Furthermore, the carriage 85 may comprise, at each longitudinal end of the lower bar 120, at least one caster Q, for example a plurality of casters Q, each of which is rotatably idle about a rotation axis parallel to the longitudinal axis of the lower bar 120.

The drive unit 90 may thus comprise a pair of opposite guides S extending longitudinally along the flanking direction B, each of which is adapted to house and support at least one caster, i.e. the casters Q as they slide.

Each of these guides S is fixed, preferably without any residual degrees of freedom, to the support frame T.

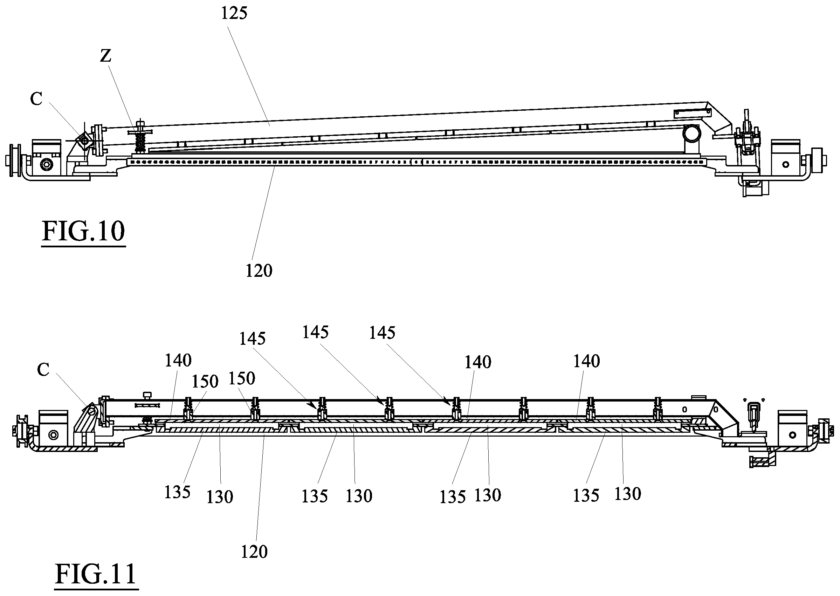

Preferably, as it can be inferred from Figure 10, a millimetre scale can be provided on the lower bar 120, which is useful for positioning the film properly.

The carriage 85 also comprises an upper bar 125, which is rigid, i.e. not deformable when subjected to the usual loads for which it is intended, e.g. made of metal.

The upper bar 125 is hinged to the lower bar 120 relative to a hinge axis C parallel to the flanking direction B.

In particular, the upper bar 125 is movable in rotation about said hinge axis C between an open position (see Fig. 10), wherein a longitudinal end of the upper bar 125 distal from the hinge axis C is distant from the lower bar 120, and a closed position (see Fig. 11), wherein said longitudinal end of the upper bar 125 distal from the hinge axis C is close to the lower bar 120.

In the open position, the carriage 85 is adapted to receive the end section of the wrapping tape 15 of the first reel B1 or the second reel B2.

In the closed position, the carriage 85 is adapted to hold said end section of the wrapping tape 15 of the first reel B1 or the second reel B2

The lower bar 120 and the upper bar 125, by means of the rotation of the upper bar 125 about said hinge axis C, can then be selectively folded over each other, by arranging the upper bar 125 in the folded position, so as to hold said initial section of the wrapping tape 15.

As it can be seen in Figure 10, the carriage 85 can also comprise at least an elastic element Z, e.g. a pair of elastic elements Z, configured to push the upper bar 125 towards the open position.

Each of said elastic bodies Z, for example, may be a compression spring provided with one end fixed to the lower bar 120 and an opposite end attached to the upper bar 125. In addition, the carriage 85 may comprise at least one contact element, in particular with an anti-slip function, associated with the lower bar 120 and adapted to make available a support surface for a first surface of the wrapping tape 15.

In particular, such a support surface is non-slip or has a high adherence (i.e. it has roughness or other characteristics such as to create friction with the wrapping tape 15), in other words such a support surface defines a friction with said first surface of the wrapping tape such as to avoid or in any case limit the possibility of the wrapping tape slipping on it.

Such a contact element 130 is preferably made of rubber, e.g. SBR 60ShA-based rubber. This contact element 130 is mounted on the lower bar 120 so that it is interposed between it and the upper bar 125.

In particular, along the longitudinal extension of the lower bar 120, a plurality of supports 135, each of which supports a respective contact element 130, may be fixed one after the other in sequence long the longitudinal extension of the lower bar 120.

Further, as better visible in Figure 11, the carriage 85 may comprise at least one abutment body 140, associated with the upper bar 125 and integral with it in rotation about said hinge axis C, which is adapted to contact a second surface of the wrapping tape 15 opposite to the first surface.

For example, the carriage 85 may comprise a plurality of abutment bodies 140 which are arranged in sequence one after the other along the longitudinal extension of the upper bar 125.

Each abutment body 140 mounted on the upper bar 125 can be movable relative thereto along a direction closer to/ away from the lower bar 120.

In particular, at least one respective elastic element 145, e.g. of the type of a compression spring, may be associated with each abutment body 140, and said elastic element 145 is configured to push it closer to the lower bar 120 along said movement direction.

In detail, each abutment body 140 has a rod 150, inserted into a through cavity formed in the upper bar 125, and on this rod 150 a compression spring is inserted, which pushes the abutment body 140 closer to the lower bar 120.

The closed position of the upper bar 125 can be (removably) fixed to the lower bar 120 by means of threaded means and/or by means of a locking pin.

Referring in particular to Figure 1, the first support pin 45A, the second support pin 45B, the carriage 85, the drive unit 90, the first welding device 50A and the second welding device 50B, are housed within an housing compartment 155 delimited by the support frame T which, as anticipated, can be defined by the structure 20 of the wrapping machine 10 itself.

In particular, the structure 20 of the wrapping machine 10 may comprise a side protection bulkhead 156, which is adapted to cover a portion 157 of the wrapping machine 10 comprising the housing compartment 155 and preferably also the wrapping device 40, as well as possibly the oven inlet conveyor and the oven inlet header (discussed below). Preferably, this side protection bulkhead 156 is defined by a sliding door which, sliding on the structure 20 along a direction parallel to the advancement direction A, is selectively adapted to occupy a closed position (shown in Figure 1), wherein it covers and protects the portion 157, and an open position (not shown), wherein it uncovers the portion 157, making the devices behind it accessible, for example for maintenance operations.

This side protection bulkhead 156 may in turn comprise a pair of access openings, each of which is provided with a respective door 160.

When the protection bulkhead 156 covers the portion 157 of the wrapping machine 10, these access openings face the housing compartment 155, each preferably at only one of the support pins 45A or 45B.

In particular, one of said openings provides access to (i.e., reaches) the first support pin 45A and the carriage 85 when it is in the first receiving position while the other of said openings provides access to (i.e., reaches) the second support pin 45B and the carriage 85 when it is in the second receiving position.

Each door 160 is associated with a respective opening so as to selectively close and open it, in particular to allow the removal and assembly of the reel of wrapping tape 15 from/onto the respective support pin 45A or 45B and also the positioning of the respective end section when the carriage is in the respective (first or second) receiving position. Each door 160, in practice, is associated so as to be movable relative to the protection bulkhead 156 (and thus also relative to the support frame T) between an open position, wherein it opens the respective access opening, allowing access to the support pin 45A or 45B placed behind, and a closed position, wherein it closes the respective access opening, preventing access to the support pin 45A or 45B placed behind.

For example, said doors 160 may each be slidably associated with the protection bulkhead 156, by means of a sliding guide parallel to the flanking direction B, and movable along said guide between said open position and said closed position.

Alternatively, each door 160 can be hinged to the protection bulkhead 156 and movable in rotation by means of said hinge between the open position and closed position.

The feeding unit G can also comprise a pair of magnetic interlocks 161, each of which is associated with a respective door 160 and is configured to detect when it is in the closed position.

In practice, each magnetic interlock 161 may comprise a magnetic element (passive, i.e. not electrically powered) fixed to the door 160 and a magnetic matching element (active, i.e. electrically powered) fixed to the support frame T.

When the door 160 is closed (and the protection bulkhead 156 is in the closed position), the magnetic element is proximal to the magnetic matching element, creating a magnetic interaction with the latter, which enables it to detect that the door 160 is actually in the closed position.

When the door 160 is open, the magnetic element is spaced from the magnetic matching element, causing the mutual magnetic interaction to cease and thus making it possible to detect that the door 160 is no longer in the closed position.

The feeding unit G can also comprise a similar magnetic interlock 162, which is associated with the protection bulkhead 156 and is configured to detect when it is in the closed position.

Furthermore, it is not excluded that the aforesaid magnetic interlocks 161 and/or 162 may be replaced by respective electromechanical interlocks (not shown), or that both of them may be present, each of which could be associated with a respective door 160 or bulkhead 156 and operable between a locked configuration wherein it mechanically locks the respective door 160 or bulkhead 156 in the closed position, and a rest configuration wherein it allows the movement of the respective door 160 or bulkhead 156 from the closed position to the open position.

Such electromechanical interlocks, in particular, may preferably be electro-actuated, i.e. electrically and/or electronically actuated.

For example, each of said electromechanical interlocks may be defined by a latch and said latch may be electro-actuated, i.e. may be commanded electrically/electronically. The feeding unit G then comprises an electronic control unit U, e.g. comprising at least a PLC, which is shown in Figure 1 with reference to the control cabinet wherein it can be contained.

This electronic control unit U, which may comprise, for example, at least one of a microcontroller, a micro-processor, an FPGA, an ASIC, etc., may further be provided with a memory unit (e.g. comprising non-volatile memory elements and, preferably, interconnected volatile memory elements adapted to process and store, respectively, information - e.g. in binary format).

This electronic control unit U can be made available by the electronic control unit of the wrapping machine 10, or it can be distinct from the electronic control unit of the wrapping machine 10 and be connected to it to exchange information/signals.

The electronic control unit U is operatively connected to one or more, preferably all, of the components of the feeding unit G, in order to control and coordinate their operation and, if necessary, to carry out diagnostics thereof.

In particular, the electronic control unit U can be operatively connected to the rotational drive motor of each support pin (first and second) 45A, 45B and configured to selectively actuate it, for example alternatively in one direction of rotation about the rotation axis R or in the opposite direction about said rotation axis R, to rotate said support pin 45A, 45B and with it the respective reel B1, B2 of wrapping tape.

Furthermore, the electronic control unit U can be operatively connected to the first welding device 50A and the second welding device 50B, to each welding bar 55, or to the respective drive actuator of the respective welding bar 55, in order to selectively drive it between the rest position and the low protection/welding position.

The electronic control unit U can also be operatively connected to each shear 70, i.e. to the respective actuator, and configured to selectively actuate it between the raised position and the lower position.

The electronic control unit U can also be operatively connected to the locking device 81. In addition, the electronic control unit U can be operatively connected via a safety PLC to each magnetic interlock 161 and 162, as well as to each electromechanical interlock, if any, in which case it can be configured to selectively actuate the latter between the respective rest configuration (i.e. essentially to deactivate it) and the respective locked configuration (i.e. essentially to activate it).

In particular, as will be detailed further below, while the wrapping machine 10 is in operation, at least one of the magnetic interlocks 161 and/or any electromechanical interlocks associated with the doors 160 are always active, so as to physically prevent the respective door 160 from being opened (in the case of the electromechanical interlocks) and/or so that the electronic control unit U can immediately interrupt the operation of the wrapping machine 10, if the respective door 160 is opened (in the case of the magnetic interlocks).

If necessary, when the magnetic interlocks 161 and/or the electromechanical interlocks associated with the doors 160 are active, the electronic control unit U can also activate a light signal appropriately arranged at the respective door 160 (or for example inside the housing compartment at the respective door).

The electronic control unit U is also operatively connected to the carriage 85, i.e. drive unit 90, and configured to selectively actuate it to move the carriage 85 (in both directions) along the flanking direction B.

Specifically, the electronic control unit U is operatively connected to the carriage 85, i.e. the drive unit 90, and configured to selectively stop the carriage 85 in one of the positions (outlined above) that it can assume along the flanking direction B.

The electronic control unit U can also be configured to check whether the reel used to feed the wrapping unit G, i.e. alternatively the first supply reel B1 or the second supply reel B2, is depleted, i.e. being depleted.

For this purpose, the electronic control unit U can be configured to actuate as follows. Starting from the initial diameter of the reel B1, B2, the thickness of the wrapping tape 15 and the rotation speed around the rotation axis R defined by the respective support pin 45A, 45B, the electronic control unit U can be configured to calculate (continuously or in discrete instants of time) the of residual diameter of the reel B1, B2.

The electronic control unit U may, then, be configured to compare the value of the residual diameter with a threshold value (pre-set or settable in the memory unit of the electronic control unit U).

If the value of the residual diameter is lower than the threshold value, then the check is positive, i.e. the reel B1, B2 is being depleted.

If the value of the residual diameter is higher than the threshold value, then the check is negative, i.e. reel B1, B2 is not being depleted.

The operation of the feeding unit G is now described with the help of the sequence of Figures 3 to 9, starting with the exemplary condition wherein the wrapping unit 40 is fed with the wrapping tape 15 coming from the second reel B2.

In this condition (see Fig. 3), the electronic control unit U is initially configured to actuate the second support pin 45B around its respective rotation axis R, so as to unwind the wrapping tape 15 from the second reel B2 and feed it to the wrapping unit 40.

The carriage 85 is in the first receiving position, where it is adapted to receive the end section of the wrapping tape 15 of the first reel B1, and the welding bar 55 of the second welding device 50B is preferably in the lowered position.

It should be noted that, at this stage, the welding bar 55 of the second welding device 50B does not carry out any welding but substantially acts as a physical barrier between the first support pin 45A and the first welding device 50A.

The fact that the welding bar 55 of the second welding device 50B is in the lowered position is detected by the respective magnetic interlock 63.

In this condition, the magnetic (and/or electromechanical) interlock 161 associated with the door 160 accessing the second support pin 45B, or the door 160 accessing the second reel B2, is active.

On the other hand, the magnetic (and/or electromechanical) interlock 161 associated with the other door 160, i.e. the door access to the first support pin 45A, is deactivated.

As mentioned above, the deactivation status of this magnetic (and/or electromechanical) interlock 161 can be signalled by means of a light signal arranged at the respective door 160 (or, for example, arranged inside the housing compartment at the respective door).

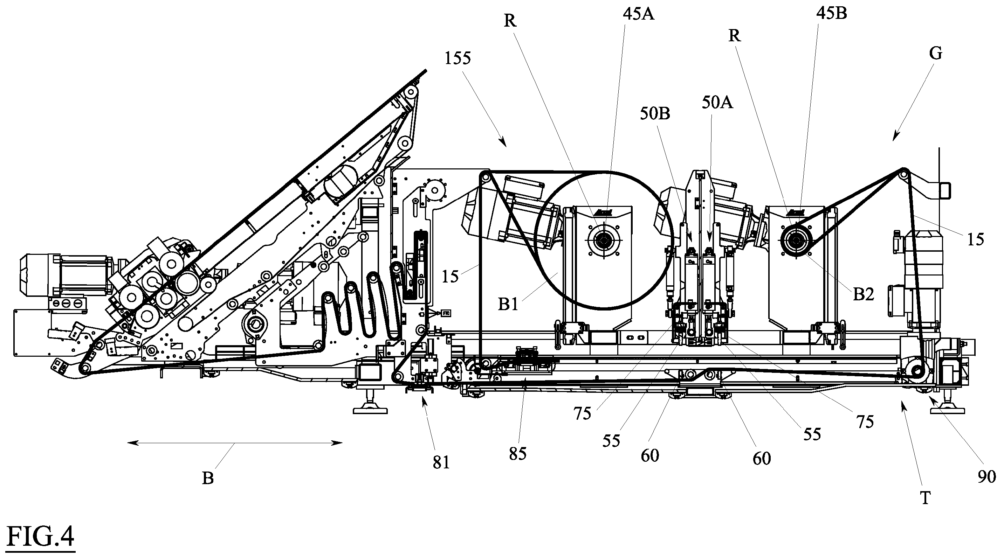

In this way, an operator can open the door 160 to access the first support pin 45A and, after having mounted the first reel B1 on it, can fix the free end flap of the latter to the carriage 85 which is in the first receiving position (see Fig. 4).

During the subsequent operation, the electronic control unit U can then be configured to check whether the second reel B2 is being depleted, e.g. by proceeding as described above.

The electronic control unit U can then be configured to actuate the carriage 85 from the first receiving position (shown in Figure 4) to the first welding position (shown in Figure 5), of course after operating the welding bar 55 of the second welding device 50B in the raised position (in order to allow the carriage 85 and the wrapping tape of the first reel B1 to pass through) if the welding bar 55 of the second welding device 50B had previously been placed in the lowered position to act as a guard.

For example, the electronic control unit U can be configured to actuate the carriage 85 from the first receiving position to the first welding position, when the depletion check of the second reel B2 is positive, only upon receipt of a command signal.

For this purpose, the electronic control unit U can then be operatively connected to a controller, e.g. of the push-button type (also known as a reel lock button provided on a control panel).

Such a controller can for example be mounted on the support frame T or possibly on the structure 20 of the wrapping machine 10, inside the housing, e.g. arranged on a control interface made available to a machine operator 10.

In use, this button can be pressed by the operator once a new first reel B1 has been mounted on the first support pin 45A and the end section of the wrapping tape has been fixed on the carriage 85 in the first receiving position.

Prior to actuating the carriage 85 from the first receiving position to the first welding position, the electronic control unit U can be configured to actuate the magnetic interlock 161 and/or the electromechanical interlock of the respective door 160 in the locked position and, if necessary, to signal such actuation by means of a light signal suitably arranged at said respective door 160 (or for example arranged inside the housing compartment at said respective door).

After the carriage 85 has reached the first welding position, the welding bar 55 of the second welding device 50B can be brought back to the lowered position in order to act as a guard (see Fig. 5).

In any case, when the carriage 85 is in the first welding position, the two wrapping tapes 15, coming from the first reel B1 and the second reel B2 respectively, are mutually overlapping and interposed between the welding bar 55 of the first welding device 50A and the respective matching bar 60.

Thus, the electronic control unit U is configured to: check when the second reel is actually depleted, stop the reel B2 in a correct welding position, and activate the locking device 81 so as to lock the wrapping tape 15 coming from the feeding unit G upstream of the tensioning unit (relative to the tape advancement direction).

Thus, it is advantageously possible to isolate the tensioning unit from the welding devices 50A and 50B.

This locking, which can be very useful for the effective operation of the welding devices 50A and 50B, can be inserted after de-energising the tensioning unit (depending on the type of tensioning unit, a residual tension may remain on the film due to the balance of the weight acting on the moving part of the film).

After locking the wrapping tape 15 and possibly before the welding devices 50A and 50B are switched on, it is also possible to eliminate the residual tension on the film entering the machine, e.g. by performing a small rotation of the reel B1, B2.

Thereafter, the electronic control unit U may be configured to actuate the first welding device 50A, in order to weld the end section of the wrapping tape 15 of the first reel B1 with said end section of the wrapping tape 15 of the second reel B2, i.e. to actuate the respective welding bar 55 in the welding position (see Fig. 6).

Then (see Fig. 8), the second support pin 45B can be actuated to rotate the second reel B2 in a direction rewind the wrapping tape 15 so as to tear the exceeding wrapping tape from the depleted reel, and at the same time the carriage 85 can be actuated along the flanking direction B moving away from the first support pin (i.e. to the right in the figure), so as to tear the exceeding wrapping tape 15 from the new reel.

If the shear is present, after the time necessary for welding has elapsed and before actuating the second support pin 45B so as to rotate the first reel B2 in a direction rewinding the wrapping tape 15 thereon and to actuate the carriage 85 along the flanking direction B in a direction moving away from the first support pin, the electronic control unit U is configured to actuate the respective shear 70, i.e. the first shear, so as to exert pressure, e.g., predominantly in a direction orthogonal to the wrapping tape, on the residual section of the wrapping tape 15 of the second reel B2 (see Fig.7).

After that, the electronic control unit U is configured to raise again the welding bar 55 of the first welding device 50A and to reopen the locking device 81.

As outlined above, by carefully managing the stops of the motors involved in the feeding of the wrapping tape 15 (prior to activation of the locking device 81), once the welding bar 55 is raised and the locking device 81 is reopened, the wrapping tape 15 remains loose (not tensioned).

By subsequently giving air to the actuators of the tensioner of the wrapping tape 15, the latter is re-tensioned rewinding it by means of the motor of the new reel B1.

It is therefore advantageously possible to check the tightness of the weld, for example by using an encoder that is placed on one of the pneumatic actuators of the tensioning unit. In fact, if by rewinding the wrapping tape 15 with the motor of the new reel B1, the moving part of the tensioning unit moves upwards, it means that the film has been correctly welded.

After this possible welding check, the electronic control unit U may be configured to actuate the first support pin 45A of the first reel B1 in rotation, so as to unwind the wrapping tape 15 from it and feed it to the wrapping unit 40.

The electronic control unit U is, for example, in the meantime or prior to carrying out this welding check and actuating the first support pin to unwind the wrapping tape 15 from the first reel B1, configured to actuate the carriage 85 into the second receiving position (see Fig. 8).

If necessary, once the carriage 85 has been moved to the second receiving position, the electronic control unit U can be configured to actuate the welding bar 55 of the first welding device 50A in the lowered position to act as a guard.

This lowered position of the welding bar 55 of the first welding device 50A may be detected by the respective magnetic interlock 63.

Once the carriage 85 has been actuated in the second receiving position, and said welding bar of the first welding device 50A has been possibly lowered, the electronic control unit U can be configured to deactivate the magnetic interlock 161 (and/or the electromechanical interlock) of the door 160 for accessing the second support pin 45B, or of the door 160 associated with the window accessing the second reel B2, and, possibly, to signal such deactivation by means of a light signal suitably arranged at said respective door 160 (or, for example, arranged inside the housing compartment at said respective door).

At the same time, the electronic control unit U can instead be configured to activate the magnetic interlock 161 associated with the other door 160, i.e. the door accessing the first reel B1.

Thereafter, the operation of the wrapping tape G is similar to what has already been explained, simply with the two reels switched.

In practice, an operator can open the door accessing the second support pin 45B and, after having mounted a new second reel B2 on it, can fasten the free end flap of the latter to the carriage 85 which is in the second receiving position (see fig. 8).

The electronic control unit U can then be configured to check whether the first reel B1 is being depleted, e.g. by proceeding as described above.

The electronic control unit U can then be configured to actuate the carriage 85 from the second receiving position to the second welding position (see Fig. 9), obviously after having actuated the welding bar 55 of the first welding device 50A in the raised position (in order to allow the carriage 85 and the wrapping tape of the second reel B2 to pass through) if the welding bar 55 of the first welding device 50A had previously been lowered to act as a guard.

For example, the electronic control unit U can be configured to actuate the carriage 85 from the second receiving position to the second welding position, when the depletion check of the second reel B1 is positive, only upon receipt of a command signal.

For this purpose, the electronic control unit U can then be operatively connected to a controller, e.g. of the push-button type (also called reel lock button).

Such a controller can for example be mounted on the support frame T or possibly on the structure 20 of the wrapping machine 10, inside the housing, e.g. arranged on a control interface made available to a machine operator 10.

In use, this button can be pressed by the operator once a new second reel B2 has been mounted on the second support pin 45B and the end section of the wrapping tape has been fastened on the carriage 85 in the second receiving position.

Prior to actuating the carriage 85 from the second receiving position to the second welding position, the electronic control unit U can be configured to actuate the magnetic interlock 161 and/or the electromechanical interlock of the respective door 160 in the locking configuration and, if necessary, to signal such actuation by means of a light signal suitably arranged at said respective door 160 (or for example arranged inside the housing compartment at the respective door).

After the carriage 85 has reached the second welding position, the welding bar 55 of the first welding device 50A can be moved back to the lowered position in order to act as a guard.

In any case, when the carriage 85 is in the second welding position, the two wrapping tapes 15, coming from the first reel B1 and the second reel B2 respectively, are mutually overlapping and interposed between the welding bar 55 of the second welding device 50B and the respective matching bar 60.

If necessary, before actuating the carriage 85 to perform the movement towards the second welding position, the electronic control unit U can be configured to actuate the magnetic interlock 161 and/or the electromechanical interlock of the respective door 160, or of the door 160 accessing the second reel B2, in the locked position and, if necessary, to signal such actuation by means of a light signal appropriately arranged at said respective door 160 (or, for example, arranged inside the reception compartment at the respective door).

Thus, the electronic control unit U is configured to: check when the first reel is actually depleted, stop the reel B1 in a correct welding position, and activate the locking device 81, so as to lock the wrapping tape 15 coming from the feeding unit G upstream of the tensioning unit (relative to the advancement direction of the tape), exactly as explained above and for the same reasons.

Thereafter, the electronic control unit U can then be configured to actuate the second welding unit 50B, in order to weld the end section of wrapping tape 15 of the second reel B2 with said section of wrapping tape 15 of the first reel B1, i.e. to actuate the respective welding bar 55 in the welding position (see Fig. 9).

Subsequently, the first support pin 45A can be actuated so as to rotate the first reel B1 in a direction rewinding the wrapping tape 15 on itself, in order to tear off the exceeding wrapping tape from the depleted reel, and at the same time the carriage 85 can be actuated in a flanking direction B (in a direction away from the second support pin 45B, i.e. to the left in Figure 9) so as to tear off the exceeding wrapping tape 15 from the new reel.

If the shear is present, after the time required for welding has elapsed and before actuating the first support pin 45A so as to rotate the first reel B1 in a direction rewind the wrapping tape 15 on it and to actuate the carriage 85 along the flanking direction B in a direction moving away from the second support pin, the electronic control unit U is configured to actuate the respective shear 70, i.e. the second shear, so as to exert pressure, for example predominantly in a direction orthogonal to the wrapping tape, on the residual section of the wrapping tape 15 of the first reel B1.

Thus, the electronic control unit U is configured to raise the welding bar 55 of the second welding device 50B and to reopen the locking device 81.

Finally, after having possibly performed the welding control as explained above, the electronic control unit U can be configured to actuate the second support pin 45B of the second reel B2 in rotation so as to unwind the wrapping tape 15 from it and feed it to the wrapping unit 40.

The electronic control unit U can then be configured to iteratively repeat the control cycle described above.

For example, it is also possible to provide that the feeding unit G is used with only one support pin 45A, 45B while the other remains unused.

For example, assuming that only the first support pin 45A is used, the operation of the feeding unit can occur as follows.

A first reel B1 is mounted on the first support pin 45A and is fed, i.e. it is unwound by actuating the first support pin 45A in order to feed the wrapping unit 40.

Meanwhile, the carriage 85 is in the first receiving position, the respective door is in the closed position and, in addition, the magnetic interlock 161 and/or the electromechanical interlock is in the respective locking configuration.

The electronic control unit U checks whether the first reel B1 is depleted, e.g. by proceeding as described above.

If the check is positive, then the electronic control unit U is configured to: stop the actuation of the first support pin 45A, automatically unlock the first reel B1 (i.e. deactivate the respective keying device so as to allow the removal of the first reel B1), activate the film lock 81 and subsequently, deactivate the magnetic interlock 161 and/or the electromechanical interlock of the door 160 accessing the first support pin 45A (possibly signalling this deactivation with a light signal).

Thus, by means of an operator, a residual section of the first reel B1 can be cut from the first reel B1 (i.e. separated from the reel core), the first reel B1 can be removed from the support pin 45A, a new reel B1 can be inserted on the first support pin 45A.

The residual section cut from the previous first reel B1 and the end section of the new first reel B1 can be fixed, one on top of the other, on the carriage 85 so as to be held by it.

Thus, the door 160 is closed by the operator.

At this point, the electronic control unit U can be configured to actuate the carriage 85 from the first receiving position to the first welding position.

Possibly, before actuating the carriage 85 to make the movement towards the first welding position, the electronic control unit U can be configured to actuate the magnetic interlock 161 and/or the electromechanical interlock of the respective door 160, or of the door 160 accessing the first reel B1, in the locked position and, possibly, to signal such actuation by means of a light signal suitably arranged at the respective door 160 (or for example arranged inside the housing compartment at the respective door).

For example, the electronic control unit U can be configured to actuate the carriage 85 from the first receiving position to the first welding position, only upon receipt of said command signal inserted by the operator.

Next, the electronic control unit U can be configured to actuate the first welding device 50A, in order to weld the end section of the wrapping tape 15 of the new first reel B1 with said residual section removed from the previous first reel B1.

The electronic control unit U is then configured, if necessary, to lower the shear, actuate the carriage 85 along the flanking direction B (in a direction moving away from the first support pin 45A (i.e. to the right in Figure 9), in order to tear off the exceeding wrapping tape 15.

Thus, the electronic control unit U is configured to raise the welding bar 55 of the first welding device 50A and to reopen the locking device 81.

Finally, after possibly performing the welding control as explained above, the electronic control unit U can be configured to bring the carriage 85 back to the first receiving position. Thus the new first reel B1 can be put into operation to feed the wrapping unit 40.

Of course, similarly, only the second support pin 45B could be used.

Turning to the wrapping unit 40, it receives the wrapping tape 15 fed by the feeding unit G, specifically one segment of wrapping tape 15 at a time, and is configured to wrap each tape segment around a respective product P.

The wrapping unit 40 comprises first of all a conveyor 165, for example of the belt type placed downstream of the second conveyor 30, for example with the interposition of a fixed sliding plane, relative to the product advancement direction along the advancement direction A.

As shown in Figure 2, this conveyor 165 makes available a third support plane 170 for the products P along which they are wrapped by the respective tape segment.

In particular, said third support plane 170 can be substantially coplanar to the second support plane defined by the second conveyor 30.

In addition, the third support plane 170 is spaced out from the second support plane along the advancement direction A, so that a gap remains between the two, which acts as an inlet for the wrapping tape segments 15 (films) coming from the feeding unit to the wrapping unit 40 via the previously mentioned feed track.

In particular, the segment of wrapping belt 15 coming from the feeding unit G arrives at the inlet of the wrapping unit 40 and is arranged in support by means of a respective initial section on the third support plane 170.

Thus, by synchronising the second support plane and the feeding unit G, a product P is pushed from the second support plane to the third support plane 170, which is then placed on said initial section of the respective segment of wrapping tape 15.

The segment of wrapping tape 15 is then held by the product P resting on it and is moved with it by the third support plane 170 along the advancement direction A.

The wrapping unit 40 thus comprises a wrapping system configured to wrap an intermediate section of the segment around the product P as it advances along the advancement direction A resting on the third support plane 170.

This wrapping system is of a known type and only schematically shown in the attached figures.

In short, such a wrapping system comprises a plurality of prongs that are continuously advanced by a pair of equal opposite drag chains sliding longitudinally along a fixed path. Each prong, along said fixed path, passes through said gap defined between the second support plane and the third support plane 170, directed from the bottom to the top and intercepts, and grasps, said intermediate section of the segment of the wrapping tape 15, when the initial section is already trapped between the product P and the third support plane 170.

The prong, moving along said fixed path, wraps the intermediate segment around the product P as it advances along the advancement direction A, with one end of the wrapping tape segment 15 being below the third support plane 170 and arranged between a gap defined between the third support plane 170 and a fourth support plane 175 (also called oven inlet conveyor) arranged downstream thereof, relative to the advancement direction A.

The passage of the product P from the third support plane 170 to the fourth support plane causes the end section of the segment of wrapping tape 15 to wrap around the product P, thus completing the wrapping.

This fourth support plane, particularly in the case where this wrapping tape 15 is shrink-wrapped, may pass through a chamber of an oven 185 that is set at a temperature suitable for the product P and the wrapping tape 15 in order to allow it to shrink by adhering to the wrapped product P.

The invention thus conceived is susceptible to several modifications and variations, all falling within the scope of the inventive concept.

For example, it is possible to provide that the feeding unit may comprise a single support pin, e.g. only the first support pin 45A, and in that case be adapted to operate as explained above when using a single support pin.

Moreover, all details can be replaced by other technically equivalent elements.

In practice, the materials used, as well as the contingent shapes and sizes, can be whatever according to the requirements without for this reason departing from the scope of protection of the following claims.

## Claims

1. A feeding unit (G) of a wrapping tape (15) for a wrapping machine (10), said feeding unit (G) comprising:
- a support frame (T),
- a pair of support pins each of which is rotatably associated with the support frame (T), wherein a first support pin (45A), adapted to receive a first reel (B1) of wrapping tape (15), and a second support pin (45B) adapted to receive a second reel (B2) of wrapping tape, the first support pin (45A) and the second support pin (45B) being mutually parallel and placed side by side at a distance from each other along a flanking direction (B),
- a first welding device (50A) adapted to weld an end section of the wrapping tape (15) of the first reel (B1) with a section of the wrapping tape (15) of the second reel (B2),
- a carriage (85) adapted to receive and hold said end section of the wrapping tape (15) of the first reel (B1) and movable along the flanking direction (B) from a first receiving position wherein it is adapted to receive said end section of the first reel (B1) to a first welding position wherein it makes said end section available to the first welding device (50A) for welding it to the section of the wrapping tape (15) of the second reel (B2),
- a drive unit (90) connected to the carriage (85) and configured to move the carriage along the flanking direction (B).

2. The feeding unit (G) according to claim 1, wherein said drive unit (90) comprises:
- a pair of flexible members (95), each of which is wound in a loop around a respective drive pulley (100) and a respective driven pulley (105), the drive pulley (100) and the driven pulley (105) being rotatable about rotation axes parallel to the rotation axes (R) of the first support pin (45A) and the second support pin (45B), said flexible members (95) having respective upper branches (115) mutually parallel and developing along the flanking direction (B),
- a drive motor connected to the drive pulleys (100) to drive them in rotation.

3. The feeding unit (G) according to claim 1, wherein in the first receiving position the carriage (90) is arranged at a distance from the first welding device (50A) greater than the distance between the first support pin (45A) and the first welding device (50A).

4. The feeding unit according to the preceding claim, wherein said carriage comprises a lower bar (120) and an upper bar (125) selectively foldable over each other to hold said end section of the wrapping tape 15 of the first reel (B1).

5. The feeding unit according to the preceding claim, wherein the carriage (85) comprises at least one contact element (130) associated with the lower bar 120 and adapted to make available a support surface for a first surface of the wrapping tape (15).

6. The feeding unit (G) according to claim 3 or 4, wherein the carriage (85) comprises:
- an abutment body (140) adapted to contact a second surface of the wrapping tape (15) opposite the first surface, said abutment body (140) being mounted on the upper bar (125) and movable relative thereto along a movement direction towards/away from the lower bar (120), and
- an elastic element (145) associated with the abutment body (140) and configured to push it towards the lower bar (120) along said movement direction.

7. The feeding unit (G) according to claim 1, comprising a second welding device (50B) configured to weld an end section of the second reel (B2) with a section of the wrapping tape of the first reel (B1), and wherein the carriage (85) is further movable along the flanking direction (B) from a second receiving position wherein it is adapted to receive said end section of the second reel (B2) to a second welding position wherein it makes said end section available to the second welding device (50B) for welding it to said section of the wrapping tape of the first reel (B1).

8. The feeding unit (G) according to claim 1 comprising an electronic control unit (U) operatively connected to the actuation unit (90) and configured to selectively actuate it.

9. The feeding unit (G) according to the preceding claim, wherein the electronic control unit (U) is configured to actuate the drive unit (90) to move the carriage (85) respectively from the first receiving position to the first welding position only upon receipt of a command signal.

10. The feeding unit (G) according to claim 1, wherein the electronic control unit (U) is configured to:
- check whether the second reel (B2) is being depleted, and
- actuate the carriage (85) from the first receiving position to the first welding position if the check is positive.

11. The feeding unit (G) according to claim 8, further comprising a shear (70), actuated by a respective actuator (75), and configured to selectively exert an orthogonal pressure on a residual section of the second reel (B2),
the electronic control unit (U) being operatively connected to the first welding device (50A), to a motor to drive in rotation the second support pin (45B), and to said actuator (75) and configured to:
- actuate the first welding device (50A) to weld the end section of the wrapping tape (15) of the first reel (B1) with the section of the wrapping tape (15) of the second reel (B2), and then
- actuate the shear (70),
- actuate the second support pin (45B) so as to rotate the second reel (B2) in a direction for rewinding the wrapping tape (15) on itself, and
- actuate the carriage (80) along the flanking direction (B) in a direction moving away from the first support pin (45A).

12. The feeding unit according to claim 1, wherein said support frame (T) delimits a housing compartment adapted to house the first support pin (45A) the second support pin (45B) the carriage (85) and the drive unit (90),
and wherein the feeding unit comprises:
- a pair of doors (160), each associated with a respective one of two distinct openings, wherein each of said openings opens at only one of the first support pin (45A) and the second support pin (45B), each of said doors (160) being movable between an open position wherein it allows access to the respective opening and a closed position wherein it prevents access to the respective opening, and
- a pair of magnetic interlocks each of which is associated with a respective door (160) and configured to detect the closed position assumed by it.

13. The feeding unit (G) according to the preceding claim, wherein the electronic control unit (U) is operatively connected to each of said magnetic interlocks and further configured to actuate the carriage (85) from the first receiving position to the first welding position only if the access door to the first support pin is in the closed position.

14. The feeding unit (G) according to claim 8, comprising a locking device (81), which is adapted to lock the wrapping tape upstream of a tensioning unit of the wrapping machine (10), and that the electronic control unit (U) can be operatively connected to the locking device (81) and configured to selectively actuate it.

15. A wrapping machine (10) comprising:
- a feeding unit (G) according to claim 1, and
- a wrapping unit (40) configured to receive the tape from the feeding unit and to wrap it around a product (P) to be wrapped.

16. The wrapping machine (10) according to the preceding claim, comprising a feeding unit (G) according to claim 12, and comprising a structure (20) and a side protection bulkhead 156, the side protection bulkhead (156) being adapted to cover the housing compartment (155) of the feeding unit (G), said side protection bulkhead (156) being defined by a door sliding relative to the frame (20) between a closed position wherein it covers the housing, and an open position wherein it uncovers the housing, said side protection bulkhead (156) making available said two distinct access openings, and wherein said doors (160) are movably mounted between the open position and the closed position on said side protection bulkhead (156).

17. A feeding unit (G) for feeding a wrapping tape (15) for a wrapping machine (10), said feeding unit (G) comprising:
- a support frame (T),
- at least one support pin (45A,45B) rotatably associated with the support frame (T), and adapted to receive a reel (B1, B2) of wrapping tape,
- a welding device (50) adapted to weld an end section of the wrapping tape (15) of the reel (B1) with a residual section of another wrapping tape (15),
- a carriage (85) adapted to receive and hold said end section of the wrapping tape (15) of the reel (B1, B2) and movable from a receiving position wherein it is adapted to receive said end section of the reel (B1, B2) to a welding position wherein it makes said end section available to the welding device (50A, 50B) for welding it to said residual section of the other wrapping tape,
a drive unit (90) connected to the carriage (85) and configured to move it between the receiving position and the welding position.
